# EUROPÄISCHE PATENTSCHRIFT

(11) **EP 0 442 447 B1**
(45) Veröffentlichungstag und Bekanntmachung des Hinweises auf die Patenterteilung: **18.05.1994**
(21) Anmeldenummer: 91101957.8
(22) Anmeldetag: 12.02.1991
(51) Int. Cl.: A47J 27/092, A47J 45/06

(54) **Dampfdruckkochtopf**
Pressure cooker
Cuiseur sous pression

(30) Priorität: 13.02.1990 DE 4004377
(43) Veröffentlichungstag der Anmeldung: 21.08.1991
(73) Patentinhaber: WMF WÜRTTEMBERGISCHE METALLWARENFABRIK AG, 73304 Geislingen (DE)
(72) Erfinder: Krejza, Jürgen, W-7343 Kuchen (DE)
(74) Vertreter: Grünecker, Kinkeldey, Stockmair & Schwanhäusser Anwaltssozietät

(56) Entgegenhaltungen:
- EP-A- 0 123 197
- EP-A- 0 281 646
- GB-A- 2 150 462
- US-A- 1 556 420
- US-A- 2 619 254

## Beschreibung

Die Erfindung bezieht sich auf ein Dampfdruckkochgefäß der in den Oberbegriffen der Ansprüche 1 und 13 erläuterten Art.

Ein derartiges Dampfdruckkochgefäß ist aus der US-A-2 619 254 bekannt. Das bekannte Dampfdruckkochgefäß weist einen der üblichen zweigeteilten Stielgriffe mit einem Deckelgriff und einem Behältergriff auf, wobei sowohl der Deckelgriff als auch der Behältergriff aus Holz oder Kunststoff mit einem relativ großen Querschnitt bestehen. Außen am Deckelgriff ist ein federnd oder kippbar gelagerter Hebel als Betätigungselement für eine Be- und Entlastungseinrichtung befestigt, wobei die Be- und Entlastungseinrichtung einstückig mit dem Betätigungsteil ausgebildet ist. Die außenliegenden Teile können zwar hinsichtlich ihrer Funktion gut überwacht werden, insbesondere die Lagerung des Betätigungsteiles ist jedoch störanfällig, beispielsweise wenn der Deckel mit der Lagerstelle für das Betätigungsteil hart an- oder aufschlägt.

Aus der US-A-1 556 420 ist ein Kochgefäß, insbesondere eine Bratpfanne, mit einem Drahtbügelgriff ersichtlich. Diese Druckschrift zeigt jedoch nicht die Verwendung eines derartigen Griffs für ein Dampfdruckkochgefäß und die dafür notwendige konstruktive Anpassung.

Ein aus der EP-A-123 197 bekanntes Dampfdruckkochgefäß weist einen zweigeteilten Stielgriff auf, wobei der obere Teil am Deckel und der untere Teil am Behälter befestigt ist. Beide Griffteile sind aus temperaturbeständigem, isolierendem Kunststoff gefertigt. Im oberen Griffteil ist ein Hohlraum vorgesehen. In diesem Hohlraum ist das Ventil und seine Be- und Entlastungseinrichtung untergebracht. Im Hohlraum ist weiterhin eine Verriegelungsvorrichtung vorgesehen, die sich aus dem oberen Griffteil erstrecken und in Ausnehmungen im unteren Griffteil einrasten muß. Desweiteren muß sich auch das Betätigungsteil für die Beund Entlastungseinrichtung für das Ventil nach oben aus dem oberen Griffteil heraus erstrecken. Für alle diese Teile muß somit eine Verbindung zwischen dem Hohlraum und der Außenseite des Griffteiles geschaffen werden. Da darüber hinaus sowohl das Betätigungsteil als auch die Verriegelungseinrichtung einen gewissen Bewegungsspielraum erfordern, müssen die ihnen zugeordneten Öffnungen im Griffteil größer ausgebildet sein, als es den baulichen Abmessungen der sich hindurch erstreckenden Teile entsprechen würde. Durch diese vergrößerten Öffnungen können jedoch Speisereste oder dergleichen in das Innere des Hohlraums gelangen. Der Hohlraum muß somit von Speiseresten gesäubert werden. Eine Reinigung der Griffteile und insbesondere des Hohlraumes ist jedoch relativ zeitaufwendig und kompliziert und birgt, insbesondere bei den bekannten, aus vielen Kleinteilen bestehenden Be- und Entlastungseinrichtungen, die Gefahr in sich, daß diese in ihrer Funktion beeinträchtigt werden.

Der Erfindung liegt somit die Aufgabe zugrunde, ein Dampfdruckkochgefäß der genannten Art bereitzustellen, das robust sowie einfach und unkompliziert zu reinigen ist und dessen Funktionsweise von jederman einfach erkannt werden kann.

Die Aufgabe wird durch die kennzeichnenden Merkmale der Ansprüche 1 und 13 gelöst.

Durch die erfindungsgemäße Ausgestaltung gemäß Anspruch 1 sind keinerlei Hohlräume mehr erforderlich. Der Griff kann somit auf einfache Weise unter einem fließenden Wasserstrahl oder in der Spülmaschine gereinigt werden. Fehlerhafte Teile oder festgesetzte Verunreinigungen können problemlos festgestellt und entfernt werden, noch bevor sie sich durch Fehlfunktion bemerkbar machen. Damit wird jedoch auch die Sicherheit des Dampfdruckkochgefäßes erhöht. Zwar sind Drahtbügelgriffe bei normalen Kochtöpfen bereits bekannt, ihre Verwendung für Dampfdruckkochgefäße wurde jedoch nie in Erwägung gezogen, da nach Auffassung der Fachwelt die bekannten Be- und Entlastungseinrichtungen für das Ventil in einem schützenden Hohlraum untergebracht werden müssen, und da die bekannten Be- und Entlastungseinrichtungen und die Sicherheitseinrichtungen gegen öffnen unter Druck komplizierte Bauteile sind, die sich in Metall nur mit großem Aufwand herstellen lassen. Die Fachwelt ging davon aus, daß diese Teile in großen Stückzahlen hergestellt, nur mit Kunststoffen wirtschaftlich herstellbar sind. Daß die Aufgabe auch mit erkannt. In der erfindungsgemäßen Ausgestaltung ist beispielsweise der Deckel während der Herstellung leichter zu handhaben bzw. eine gesonderte, aufwendig zu fertigende, vom Griff vorstehende und damit beschädigungsanfüllige Führung für das Betätigungsteil nicht mehr notwendig.

In der Ausgestaltung nach Anspruch 2 kann sofort visuell festgestellt werden, ob Behälter und Deckel druckdicht gegeneinander verriegelt sind.

Die Ansprüche 3 bis 10 beschreiben eine konstruktiv besonders einfache Be- und Entlastungseinrichtung bzw. Verriegelungseinrichtung, die so robust auszubilden sind, daß sie auch bei freiliegender Anordnung durch einen normalen Gebrauch nicht beschädigt werden kann.

Durch die Ausgestaltung nach den Ansprüchen 11 und 12 können unterschiedliche Be- bzw. Entlastungszustände des Ventils eingestellt werden.

Die erfindungsgemäße Be- und Entlastungseinrichtung sowie die Verriegelungseinrichtung gemäß den Ansprüchen 13 bis 19 sind durch ihre robuste, einfache und wenige Teile erfordernde Ausgestaltung nicht nur dann leicht zu reinigen, wenn sie an einem Drahtbügelgriff nach außen freiliegt, sondern können auch dann einfach abgespült werden, wenn sie in konventioneller Weise im Inneren eines Kunststoffgriffes angeordnet sind. So sind beispielsweise keine empfindlichen und auszutarierenden Teile vorgesehen, die durch einen starken Wasserstrahl beschädigt werden könnten.

Ein Ausführungsbeispiel der Erfindung wird nachfolgend anhand der Zeichnungen näher erläutert. Es zeigen:
**Figur 1** eine Seitenansicht der relevanten Teile des erfindungsgemäßen Dampfdruckkochgefäßes im Schnitt,
**Figur 2** die Draufsicht auf Figur 1 und
**Figur 3** den Schnitt III-III aus Figur 1.

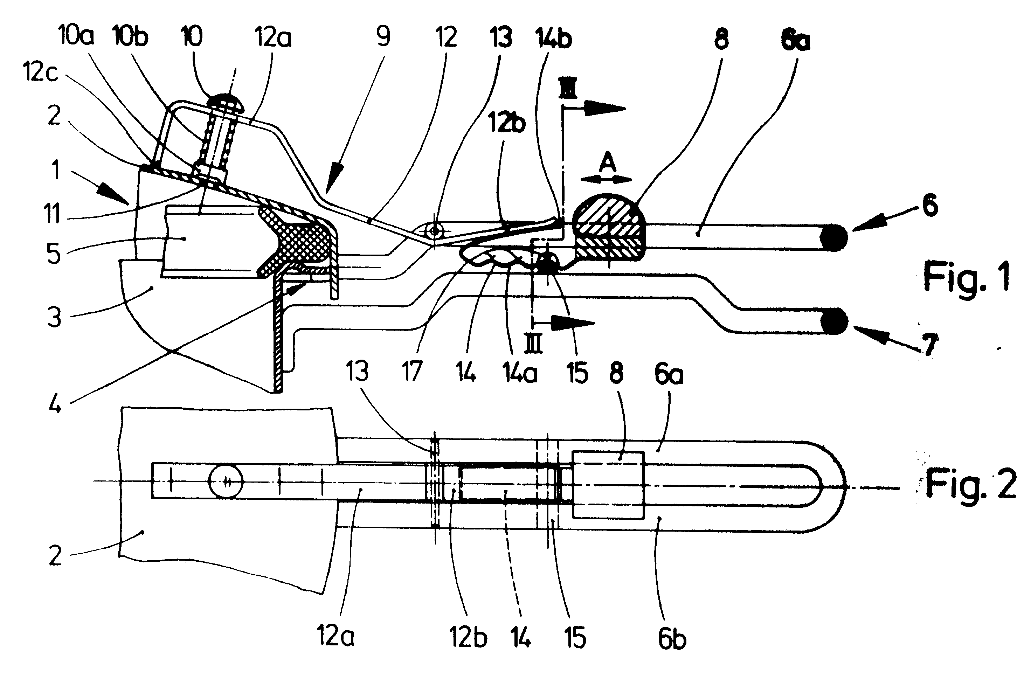

Figur 1 zeigt einen Teil eines Dampfdruckkochgefäßes 1, der in üblicher Weise einen Deckel 2 und einen Behälter 3 aufweist. Der Deckel 2 und der Behälter 3 sind über herkömmliche Bajonettverschlußmittel 4 und einen dazwischen liegenden Dichtring 5 druckdicht aufeinander zu befestigen. Das Dampfdruckkochgefäß 1 enthält einen Stielgriff, der einen am Deckel 2 befestigten Deckelgriff 6 und einen am Behälter 3 befestigten Behältergriff 7 umfaßt. Beide Griffe 6 und 7 bestehen, wie auch Figur 2 zeigt, aus einer Drahtschlaufe aus relativ schlecht warmeleitendem Material, beispielsweise aus rostbeständigem Stahl. Die Drahtschlaufe für den Deckelgriff 6 liegt plan und erstreckt sich im wesentlichen waagerecht, während die Drahtschlaufe für den Behältergriff 7 am freien Ende nach unten abgewinkelt ist, damit Deckel- und Behältergriff zum öffnen und Schließen des Gefäßes getrennt voneinander ergriffen werden können. Der Draht weist im dargestellten Ausführungsbeispiel einen runden Querschnitt auf, es sind jedoch auch ovale oder eckige Querschnitte denkbar.

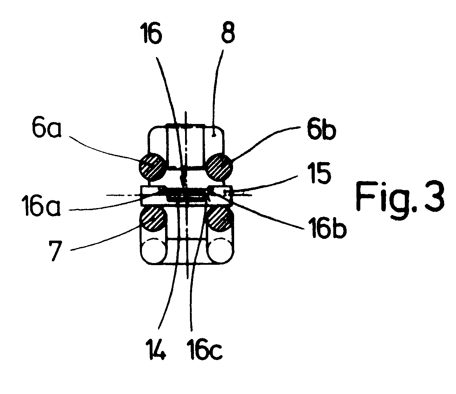

Der Deckelgriff 6 enthält zwei parallel laufende Stäbe, die als Führungsstäbe 6a, 6b eines in Richtung des Doppelpfeiles A verschiebbaren Betätigungsteiles 8 ausgebildet sind, das mit seitlichen Führungsöffnungen die Führungsstäbe zumindest teilweise umgreift (Fig. 3). Mit dem Betätigungsteil 8 wird eine Be- und Entlastungseinrichtung 9 betätigt, mit der ein Ventilteil 10a eines Ventiles 10 gegen eine im Deckel 2 angeordnete Ventilöffnung 11 mit unterschiedlichen Belastungszuständen belastbar ist. Das Ventilteil 10a stützt sich über eine Druckfeder 10b an einem Hebelarm 12a eines zweiseitigen, aus Flachstahl bestehenden Belastungshebels 12 der Be- und Entlastungseinrichtung 9 ab. Der Belastungshebel 12 ist an einem als Drehachse wirkenden Metallstift 13 gelagert, der im wesentlichen horizontal und senkrecht zur Richtung des Doppelpfeiles A am Deckelgriff 6 befestigt ist. Der zweite Hebelarm 12b des Belastungshebels 12 erstreckt sich in Richtung des Betätigungsteiles 8 von der Drehachse 13 leicht schräg nach oben.

Mit dem Betätigungsteil 8 ist ein Drücker in Form einer V-förmigen Blattfeder 14 aus Metall verbunden. Die Blattfeder ist derart angeordnet, daß ihre zulaufende Spitze in Richtung auf die Drehachse 13 weist. Ein unterer Schenkel 14a der Blattfeder 14 ist fest mit dem Betätigungsteil 8 verbunden, während der obere Schenkel 14b der Blattfeder 14 frei federnd angeordnet ist und in Eingriff mit dem zweiten Hebelarm 12b treten kann.

Auf dem Behältergriff 7, unterhalb des freien Endes des zweiten Hebelarmes 12b des Belastungshebels 12 ist ein Widerlager 15 in Form eines auf den Drahtbügel aufgeschweißten Metallstiftes vorgesehen. Das Widerlager 15 weist eine in Richtung der Blattfeder 14 offene, parallel zur Drehachse 13 verlaufende Ausnehmung 16 (Figur 3) auf, deren seitliche Begrenzungsflächen 16a und 16b sich in einem der Breite der Blattfeder 14 entsprechenden Abstand gegenüberliegen, und die mit einer Auflauffläche 16c für die Blattfeder 14 versehen ist. An den Teilen des unteren Schenkels 14a der Blattfeder 14, die mit der Auflauffläche 16c bei einem Verschieben des Betätigungsteiles 8 in Richtung des Pfeiles A in Eingriff treten, sind eine Mehrzahl von Ausnehmungen 17 in Form von in den Schenkel 14a eingebogenen Wellen vorgesehen. Die Ausnehmungen 17 sind in ihren Abmessungen an das Widerlager 15 bzw. die Auflauffläche 16c derart angepaßt, daß sie Raststellungen definieren.

Die Abmessungen der Be- und Entlastungseinrichtung, insbesondere der Abstand zwischen dem Widerlager 15 bzw. der Auflauffläche 16c und dem zweiten Hebelarm 12b, der Steigungswinkel des zweiten Hebelarmes 12b, der Öffnungswinkel und die Länge der Blattfeder 14 sowie der Abstand des Widerlagers 15 von der Drehachse 13 des Belastungshebels sind derart aufeinander und auf die Lage der Ausnehmungen 17 abgestimmt, daß beim Verschieben des Betätigungsteiles 8 entlang des Pfeiles A in Richtung auf den Deckel 2 die Blattfeder 14 zwischen das Widerlager 15 bzw. die Auflauffläche 16c und den zweiten Hebelarm 12b eingeschoben wird. Im Verlaufe des Einschiebens wird die Blattfeder 14 mehr und mehr gespannt, so daß sich die über die Feder 10b auf das Ventilteil 10a ausgeübte Kraft so lange erhöht, bis die in Figur 1 gezeichnete Stellung erreicht ist, in der die dem Betätigungsteil 8 am nächsten liegende Ausnehmung 17 mit dem Widerlager 15 verrastet ist. In dieser Stellung wird das Ventilteil 10a mit einer Kraft belastet, die größer als der Kochdruck jedoch kleiner als jeder für den ordnungsgemäßen Betrieb des Kochgefäßes gefährliche Druck liegt, so daß das Ventil 10 als Sicherheitsventil wirken kann.

Soll zum schnellen Beenden des Kochvorganges Dampf abgelassen werden, so wird das Betätigungsteil 8 entlang des Pfeiles A vom Deckel 2 weggeschoben, bis entweder die mittlere oder die der Spitze der Blattfeder am nächsten liegende Ausnehmung mit dem Widerlager verrastet ist. In diesen Raststellungen kann der Innendruck im Kochtopf das Ventilteil 10a mit dem Hebelarm 12a anheben, so daß ein schneller Druckabbau möglich ist.

Die bei Dampfdruckkochgefäßen mit Bajonettverschluß 4 erforderliche Verriegelung von Deckel 2 und Behälter 3 in Kochstellung, um sicherzugehen, daß die Bajonettverschlußstege während des Kochens und bei Überdruck in vollflächiger Anlage zueinander stehen und bleiben, wird durch die Anschlagflächen 16a und 16b der Ausnehmung 16 des Widerlagers 15 erreicht. Die beiden Anschlagflächen 16a und 16b befinden sich, zumindest in der in Figur 1 gezeichneten Kochstellung, beidseitig der Blattfeder 14 und verhindern, daß die beiden Griffe 6, 7 in einer Richtung senkrecht zur Zeichnungsebene in Figur 1 aus ihrer übereinander liegenden Anordnung verdreht werden (die übereinander liegende Anordnung der Griffe 6, 7 entspricht einer vollen Eingriffsstellung des Bajonettverschlusses). Erst wenn das Betätigungsteil 8 soweit entlang des Pfeiles A vom Deckel 2 zurückgeschoben wurde, daß die Blattfeder 14 vollständig aus ihrem Eingriff mit dem Widerlager 15 zurückgezogen wurde, können die beiden Griff zum öffnen des Deckels 2 gegeneinander verdreht werden.

In Abwandlung des beschriebenen und gezeichneten Ausführungsbeispieles kann das in den Figuren beschriebene Betätigungsteil und die Be- und Entlastungseinrichtung auch in herkömmlicher Weise im Inneren eines Hohlraumes in einem der üblichen Kunststoffgriffe angeordnet sein. Andererseits sind für die gezeichneten Drahtbügelgriffe auch andere Betätigungsteile sowie Be- und Entlastungseinrichtungen zu verwenden, sofern sie robust genug für die freiliegende Anordnung sind. Form und Querschnitt der Drahtbügelgriffe können nach ästhetischen bzw. funktionellen Gesichtspunkten abgeändert werden.

Die Drehachse des Belastungshebels kann statt am Deckelgriff am Deckel selbst angeordnet sein. Es ist weiterhin möglich, anstelle des federnden Drückers, den untergreifenden Schenkel des Drückers starr und den untergriffenen Hebelarm des Belastungshebels federnd auszubilden. Als Verriegelungseinrichtung kann weiterhin eine vom Betätigungsteil nach unten vorstehende Nase verwendet werden, die sich zwischen den Stäben der den Behältergriff bildenden Drahtschlaufe befindet, wenn das Betätigungsteil nach vorn in Kochposition geschoben wurde, und die in Entlastungsstellung oberhalb des abgewinkelten Bereichs des Behältergriffes und außerhalb der Drahtschlaufe steht.

## Patentansprüche

1. Dampfdruckkochgefäß (1) mit einem Deckel (2), einem Deckelgriff (6), einem Behälter (3), einem Behältergriff (7), einem am Deckel (2) angeordneten Ventil (10), einer über ein vom Benutzer zu bewegendes Betätigungsteil (8) betätigbaren Be- und Entlastungseinrichtung (9) für das Ventil (10), wobei das Betätigungsteil (8) und die Be- und Entlastungseinrichtung (9) an einem der Griffe (6, 7) nach außen freiliegend gelagert bzw. geführt sind, und mit einer lösbaren Verriegelungseinrichtung (16a, 16b), mit der der Deckel (2) und Behälter (3) in Kochposition gegeneinander verriegelbar sind, **dadurch gekennzeichnet,** daß wenigstens einer der Griffe (6, 7) durch einen Drahtbügel gebildet ist, daß die Be- und Entlastungseinrichtung (9) am Drahtbügelgriff (6) gelagert ist, und daß der Drahtbügelgriff (6) zwei parallel verlaufende Führungsstäbe (6a, 6b) aufweist, die als Schiebeführung für das Betätigungsteil (8) ausgebildet sind.

2. Dampfdruckkochgefäß nach Anspruch 1, **dadurch gekenn****zeichnet,** daß beide Griffe (6, 7) Drahtbügelgriffe sind und die Verriegelungsvorrichtung (16a, 16b) nach außen freiliegt.

3. Dampfdruckkochgefäß nach Anspruch 1 oder 2, **dadurch ge****kennzeichnet,** daß die Be- und Entlastungseinrichtung (9) einen mit dem Ventil (10) in Eingriff stehenden Belastungshebel (12) und einen mit dem Betätigungsteil (8) in Verbindung stehenden Drücker (14) enthält, mit dem beim Bewegen des Betätigungsteiles (8) eine Belastungskraft auf den Belastungshebel (12) aufbringbar ist.

4. Dampfdruckkochgefäß nach Anspruch 3, **dadurch gekenn****zeichnet,** daß der Belastungshebel (12) ein zweiseitiger, um eine Achse (13) schwenkbarer Kipphebel ist, dessen erster Hebelarm (12a) mit dem Ventil (10) und dessen zweiter Hebelarm (12b) mit dem Drücker (14) in Eingriff bringbar ist.

5. Dampfdruckkochgefäß nach Anspruch 3 oder 4, **dadurch ge****kennzeichnet,** daß der Drücker (14) eine V-förmig gebogene Blattfeder mit in Belastungsrichtung zulaufenden Schenkeln (14a, 14b) ist, die zum Aufbringen der Belastungskraft zwischen dem zweiten Hebelarm (12b) des Belastungshebels (12) und einer Auflauffläche (16c) eines Widerlagers (15) einführbar ist.

6. Dampfdruckkochgefäß nach Anspruch 5, **dadurch gekenn****zeichnet,** daß ein Schenkel (14a) der Blattfeder mit dem Betätigungsknopf (8) verbunden und an das Widerlager (15) anlegbar ist und der andere, frei federnde Schenkel (14b) an den zweiten Hebelarm (12b) anlegbar ist.

7. Dampfdruckkochgefäß nach einem der Ansprüche 3 bis 5, **dadurch gekennzeichnet,** daß die Achse (13) des Belastungshebels (12) und die Schiebeführung (6a, 6b) des Betätigungsteiles (8) am Deckelgriff (6) und das Widerlager (15) am Behältergriff (7) angeordnet ist.

8. Dampfdruckkochgefäß nach Anspruch 7, **dadurch gekenn****zeichnet,** daß sich die Achse (13) des Belastungshebels (12) und die Auflauffläche (16c) des Widerlagers (15) im wesentlichen horizontal erstrecken, und daß die Verriegelungseinrichtung zwei sich in einem der Breite der Blattfeder (14) entsprechenden, horizontalen Abstand gegenüberliegende Anschlagflächen (16a, 16b) am Behältergriff (7) aufweist, zwischen die die Blattfeder bei ihrer Bewegung in Belastungsrichtung einführbar ist.

9. Dampfdruckkochgefäß nach Anspruch 8, **dadurch gekenn****zeichnet,** daß die Anschlagflächen (16a, 16b) als seitliche Begrenzungen der Auflauffläche (16c) ausgebildet sind.

10. Dampfdruckkochgefäß nach einem der Ansprüche 5 bis 9, **dadurch gekennzeichnet,** daß die Verriegelungseinrichtung (16a, 16b) und das Widerlager (15) an einer Ausnehmung (16) in einem Stift angeordnet sind.

11. Dampfdruckkochgefäß nach einem der Ansprüche 1 bis 10, **dadurch gekennzeichnet,** daß Raststellungen (17) zum Einstellen verschiedener Be- bzw. Entlastungszustände des Ventils (10) vorgesehen sind.

12. Dampfdruckkochgefäß nach Anspruch 11, **dadurch gekenn****zeichnet,** daß die Raststellungen (17) durch Ausnehmungen des mit dem Widerlager (15) in Eingriff bringbaren Teils (14a) des Drückers (14) gebildet sind.

13. Dampfdruckkochgefäß mit einem Behälter, einem Behältergriff, einem Deckel, einem Deckelgriff, einer zwischen beiden Griffen vorgesehenen Verriegelungseinrichtung, einem am Deckel angeordneten Ventil und einer über ein Betätigungsteil zu betätigenden, Be- und Entlastungseinrichtung für das Ventil, wobei die Be- und Entlastungseinrichtung einen mit dem Ventil verbundenen schwenkbaren Belastungshebel und einen über ein Widerlager auf den Belastungshebel federnd einwirkenden, mit dem Betätigungsteil verbundenen Drücker enthält, **dadurch gekennzeichnet,** daß der Drücker V-förmig und der Belastungshebel (12) zweiseitig ausgebildet ist, wobei ein Hebelarm (12a) des Belastungshebels (12) mit dem Ventil (10) verbunden ist, und zwischen dem zweiten Hebelarm (12b) und das Widerlager (15) der V-förmige Drücker (14) einführbar ist.

14. Dampfdruckkochgefäß nach Anspruch 13, **dadurch gekenn****zeichnet,** daß der Belastungshebel (12) um eine am Deckelgriff (6) angeordnete Drehachse (13) schwenkbar ist.

15. Dampfdruckkochgefäß nach Anspruch 13 oder 14, **dadurch** **gekennzeichnet,** daß der Drücker als V-förmige Blattfeder (14) ausgebildet ist.

16. Dampfdruckkochgefäß nach einem der Ansprüche 13 bis 15, **dadurch gekennzeichnet,** daß die Verriegelungseinrichtung am Behältergriff (7) angeordnet ist und zwei in Kochstellung der Be- und Entlastungseinrichtung beidseitig des Drückers (14) angeordnete Anschlagflächen (16a, 16b) für den Drücker (14) aufweist.

17. Dampfdruckkochgefäß nach Anspruch 16, **dadurch gekenn****zeichnet,** daß die Anschlagflächen (16a, 16b) eine Auflauffläche (16c) des Widerlagers (15) seitlich begrenzen.

18. Dampfdruckkochgefäß nach Anspruch 16 oder 17, **dadurch** **gekennzeichnet,** daß die Anschlagflächen (16a, 16b) und die Auflauffläche (16c) des Widerlagers (15) in einer Ausnehmung (16) eines Stiftes angeordnet sind.

19. Dampfdruckkochgefäß nach einem der Ansprüche 13 bis 18, **dadurch gekennzeichnet,** daß ein am Widerlager (15) angreifender Teil (14a) der Blattfeder (14) verschiedene Raststellungen zum Einstellen unterschiedlicher Be- und Entlastungszustände des Ventils (10) bildende Ausnehmungen (17) aufweist.

## Claims

1. Steam pressure cooking vessel (1) with a lid (2), a lid handle (6), a container (3), a container handle (7), a valve (10) arranged on the lid (2), a loading and load release device (9) for the valve (10) which can be operated by an operating portion (8) to be moved by the user, wherein the operating portion (8) and the loading and load release device (9) are mounted or guided on one of the handles (6, 7) so as to be exposed on the outside, and with a releasable locking device (16a, 16b) with which the lid (2) and container (3) can be locked together in the cooking position, characterised in that at least one of the handles (6, 7) is formed by a U-shaped wire frame, in that the loading and load release device (9) is mounted on the wire frame handle (6), and in that the wire frame handle (6) comprises two parallel guide rods (6a, 6b) which are constructed as a sliding guide for the operating portion (8).

2. Steam pressure cooking vessel according to claim 1, characterised in that both handles (6, 7) are wire frame handles and the locking device (16a, 16b) is exposed on the outside.

3. Steam pressure cooking vessel according to claim 1 or 2, characterised in that the loading and load release device (9) contains a loading lever (12) engaged with the valve (10) and a latch (14) which is connected to the operating portion (8) and with which, on movement of the operating portion (8), a loading force can be applied to the loading lever (12).

4. Steam pressure cooking vessel according to claim 3, characterised in that the loading lever (12) is a two-sided tilt lever which can be pivoted about an axis (13) and of which the first lever arm (12a) can be brought into engagement with the valve (10) and the second lever arm (12b) with the latch (14).

5. Steam pressure cooking vessel according to claim 3 or 4, characterised in that the latch (14) is a leaf spring bent into a V-shape with arms (14a, 14b) converging in the direction of loading, which for application of the loading force can be introduced between the second lever arm (12b) of the loading lever (12) and an arresting surface (16c) of an abutment (15).

6. Steam pressure cooking vessel according to claim 5, characterised in that one arm (14a) of the leaf spring is connected to the operating knob (8) and can be applied to the abutment (15), and the other, free-springing arm (14b) can be applied to the second lever arm (12b).

7. Steam pressure cooking vessel according to any of claims 3 to 5, characterised in that the axis (13) of the loading lever (12) and the sliding guide (6a, 6b) of the operating portion (8) is arranged on the lid handle (6), and the abutment (15) on the container handle (7).

8. Steam pressure cooking vessel according to claim 7, characterised in that the axis (13) of the loading lever (12) and the arresting surface (16c) of the abutment (15) extend essentially horizontally, and in that the locking device comprises two stop faces (16a, 16b) on the container handle (7), which are located opposite each other at a horizontal distance corresponding to the width of the leaf spring (14) and between which the leaf spring can be introduced in the direction of loading during movement thereof.

9. Steam pressure cooking vessel according to claim 8, characterised in that the stop faces (16a, 16b) are constructed as lateral boundaries of the arresting surface (16c).

10. Steam pressure cooking vessel according to any of claims 5 to 9, characterised in that the locking device (16a, 16b) and the abutment (15) are arranged on a recess (16) in a pin.

11. Steam pressure cooking vessel according to any of claims 1 to 10, characterised in that latching positions (17) are provided for setting different loading and load release states of the valve (10).

12. Steam pressure cooking vessel according to claim 11, characterised in that the latching positions (17) are formed by recesses of the portion (14a) of the latch (14) which can be brought into engagement with the abutment (15).

13. Steam pressure cooking vessel with a container, a container handle, a lid, a lid handle, a locking device provided between the two handles, a valve arranged on the lid and a loading and load release device for the valve to be operated by an operating portion, wherein the loading and load release device contains a pivotable loading lever connected to the valve and a latch connected to the operating portion and resiliently acting via an abutment on the loading lever, characterised in that the latch is V-shaped and the loading lever (12) is two-sided, wherein one lever arm (12a) of the loading lever (12) is connected to the valve (10), and the V-shaped latch (14) can be introduced between the second lever arm (12b) and the abutment (15).

14. Steam pressure cooking vessel according to claim 13, characterised in that the loading lever (12) is pivotable about an axis of rotation (13) arranged on the lid handle (6).

15. Steam pressure cooking vessel according to claim 13 or 14, characterised in that the latch is constructed as a V-shaped leaf spring (14).

16. Steam pressure cooking vessel according to any of claims 13 to 15, characterised in that the locking device is arranged on the container handle (7) and comprises two stop faces (16a, 16b) for the latch (14) arranged on both sides of the latch (14) in the cooking position of the loading and load release device.

17. Steam pressure cooking vessel according to claim 16, characterised in that the stop faces (16a, 16b) laterally define an arresting surface (16c) of the abutment (15).

18. Steam pressure cooking vessel according to claim 16 or 17, characterised in that the stop faces (16a, 16b) and the arresting surface (16c) of the abutment (15) are arranged in a recess (16) of a pin.

19. Steam pressure cooking vessel according to any of claims 13 to 18, characterised in that a portion (14a) of the leaf spring (14) engaging the abutment (15) comprises recesses (17) forming different latching positions for setting different loading and load release states of the valve (10).

## Revendications

1. Autocuiseur (1) avec un couvercle (2), une poignée de couvercle (6), un récipient (3), une poignée de récipient (7), une soupape (10) ménagée sur le couvercle (2), un dispositif de charge et de décharge (9) pour la soupape (10) pouvant être actionné par un élément d'actionnement (8) à déplacer par l'utilisateur, l'élément d'actionnement (8) et le dispositif de charge et de décharge (9) étant montés ou guidés exposés vers l'extérieur sur l'une des poignées (6, 7), et avec un dispositif de verrouillage (16a, 16b) amovible par lequel le couvercle (2) et le récipient (3) sont verrouillables l'un sur l'autre en position de cuisson, caractérisé en ce qu'au moins l'une des poignées (6, 7) est constituée par une pièce en fil métallique recourbée en arc, que le dispositif de charge et de décharge (9) est monté sur la poignée en fil métallique recourbé en arc (6), et que la poignée en fil métallique recourbé en arc (6) présente deux tiges de guidage (6a, 6b) parallèles, qui sont formées en guidage à coulisse pour l'élément d'actionnement (8).

2. Autocuiseur selon la revendication 1, caractérisé en ce que les deux poignées (6, 7) sont des poignées en fil métallique recourbé en arc et en ce que le dispositif de verrouillage (16a, 16b) est exposé vers l'extérieur.

3. Autocuiseur selon la revendication 1 ou 2, caractérisé en ce que le dispositif de charge et de décharge (9) comprend un levier de charge (12) en contact avec la soupape (10) et un poussoir (14) relié à l'élément d'actionnement (8), ce poussoir permettant, lors du déplacement de l'élément d'actionnement (8), d'exercer une force de sollicitation sur le levier de charge (12).

4. Autocuiseur selon la revendication 3, caractérisé en ce que le levier de charge (12) est un levier oscillant double propre à pivoter autour d'un axe (13), dont le premier bras de levier (12a) peut être amené en contact avec la soupape (10) et dont le second bras de levier (12b) peut être amené en contact avec le poussoir (14).

5. Autocuiseur selon la revendication 3 ou 4, caractérisé en ce que le poussoir (14) est un ressort à lame plié en forme de V avec des branches (14a, 14b) concourant dans le sens de la charge, ce ressort pouvant être inséré entre le second bras de levier (12b) du levier de charge (12) et une surface de contact (16c) d'une butée (15), pour l'application de la force de sollicitation.

6. Autocuiseur selon la revendication 5, caractérisé en ce qu'une branche (14a) du ressort à lame est reliée au bouton d'actionnement (8) et peut s'appuyer contre la butée (15), tandis que l'autre branche (14b), faisant librement ressort, peut être appliquée contre le second bras de levier (12b).

7. Autocuiseur selon l'une des revendications 3 à 5, caractérisé en ce que l'axe (13) du levier de charge (12) et le guidage à coulisse (6a, 6b) de l'élément d'actionnement (8) sont ménagés sur la poignée de couvercle (6) et la butée (15) sur la poignée de récipient (7).

8. Autocuiseur selon la revendication 7, caractérisé en ce que l'axe (13) du levier de charge (12) et la surface de contact (16c) de la butée (15) s'étendent sensiblement horizontalement, et que le dispositif de verrouillage présente, sur la poignée de récipient (7), deux surfaces d'arrêt (16a, 16b) situées face à face avec un écartement horizontal entre elles, correspondant à la largeur du ressort à lame (14), et entre lesquelles le ressort à lame peut être introduit lors de son mouvement dans le sens de sollicitation.

9. Autocuiseur selon la revendication 8, caractérisé en ce que les surfaces d'arrêt (16a, 16b) sont conçues en tant que limitations latérales de la surface de contact (16c).

10. Autocuiseur selon l'une des revendications 5 à 9, caractérisé en ce que le dispositif de verrouillage (16a, 16b) et la butée (15) sont disposés au niveau d'un évidement (16) dans une broche.

11. Autocuiseur selon l'une des revendications 1 à 10, caractérisé en ce qu'il est prévu des positions de crantage (17) pour le réglage de divers états de charge ou de décharge de la soupape (10).

12. Autocuiseur selon la revendication 11, caractérisé en ce que les positions de crantage (17) sont constituées par des évidements de la partie (14a) du poussoir (14) qui peut venir en contact avec la butée (15).

13. Autocuiseur avec un récipient, une poignée de récipient, un couvercle, une poignée de couvercle, un dispositif de verrouillage prévu entre les deux poignées, une soupape ménagée sur le couvercle et un dispositif de charge et de décharge pour la soupape, qui est à commander par l'intermédiaire d'un élément d'actionnement, le dispositif de charge et de décharge comprenant un levier de charge pivotant relié à la soupape et un poussoir relié à l'élément d'actionnement et agissant élastiquement, par l'intermédiaire d'une butée, sur le levier de charge, caractérisé en ce que le poussoir est formé en V et en ce que le levier de charge (12) est formé à deux côtés, un bras de levier (12a) du levier de charge (12) étant relié à la soupape (10) et le poussoir en forme de V (14) pouvant être inséré entre le second bras de levier (12b) et la butée (15).

14. Autocuiseur selon la revendication 13, caractérisé en ce que le levier de charge (12) peut pivoter autour d'un pivot (13) disposé sur la poignée de couvercle (6).

15. Autocuiseur selon la revendication 13 ou 14, caractérisé en ce que le poussoir est réalisé en tant que ressort à lame (14) en forme de V.

16. Autocuiseur selon l'une des revendications 13 à 15, caractérisé en ce que le dispositif de verrouillage est disposé sur la poignée de récipient (7) et qu'il présente deux surfaces d'arrêt (16a, 16b) pour le poussoir (14), disposées de part et d'autre du poussoir (14) dans la position de cuisson du dispositif de charge et de décharge.

17. Autocuiseur selon la revendication 16, caractérisé en ce que les surfaces d'arrêt (16a, 16b) délimitent latéralement une surface de contact (16c) de la butée (15).

18. Autocuiseur selon la revendication 16 ou 17, caractérisé en ce que les surfaces d'arrêt (16a, 16b) et la surface de contact (16c) de la butée (15) sont disposées dans un évidement (16) d'une broche.

19. Autocuiseur selon l'une des revendications 13 à 18, caractérisé en ce qu'une partie (14a) du ressort à lame (14), venant en contact avec la butée (15), présente des évidements (17) constituant diverses positions de crantage pour le réglage de différents états de charge et de décharge de la soupape (10).
